# EUROPÄISCHE PATENTSCHRIFT

(11) **EP 1 262 484 B1**
(45) Veröffentlichungstag und Bekanntmachung des Hinweises auf die Patenterteilung: **16.08.2006**
(21) Anmeldenummer: 02009926.3
(22) Anmeldetag: 03.05.2002
(51) Int. Cl.: C07F 7/18

(54) **Verfahren zur Spaltung von cyclischen Organosilanen bei der Herstellung von aminofunktionellen Organoalkoxylanen**
Process for the cleaving of cyclic organosilanes during the preparation of aminofunctional organoalkoxysilanes
Procédé de clivage d'organosilanes cycliques pendant la préparation d' organoalkoxysilanes à fonction amino

(30) Priorität: 01.06.2001 DE 10126669
(43) Veröffentlichungstag der Anmeldung: 04.12.2002
(73) Patentinhaber: Degussa AG, 40474 Düsseldorf (DE)
(72) Erfinder: Kropfgans, Frank, Dr., 79618 Rheinfelden (DE); Rauleder, Hartwig, Dr., 79618 Rheinfelden (DE)

(56) Entgegenhaltungen:
- EP-A- 0 702 017
- EP-A- 0 905 137
- DE-B- 2 749 316
- TSAI, TSU-TZU ET AL: "Synthesis of 1-aza-2-silacyclopentane compounds" JOURNAL OF ORGANIC CHEMISTRY (1972), 37(4), 596-600 , 1972, XP002249054

## Beschreibung

Die vorliegende Erfindung betrifft ein Verfahren zur Herstellung von aminofunktionellen Organoalkoxysilanen durch Umsetzung von chlorfunktionellen Organoalkoxysilanen mit Ammoniak oder einem organischen Amin, Abtrennen des dabei gebildeten Ammonchlorids oder des organischen Aminhydrochlorids und einer destillativen Aufarbeitung des so erhaltenen Rohprodukts. Aminofunktionelle Organoalkoxysilane werden nachfolgend auch als Aminosilane bezeichnet.

Aminosilane haben ein vielfältiges Anwendungsspektrum. Sie werden beispielsweise für Glasfaserschlichten verwendet oder in der Gießereiindustrie als Verarbeitungshilfsstoffe eingesetzt, ebenfalls dienen sie als Haftvermittler für lagerungsstabile Harze.

Es ist bekannt, aminofunktionelle Organoalkoxysilane aus chlorfunktionellen Organoalkoxysilanen und Ammoniak oder organischen Aminen herzustellen (DE-PS 10 23 462, DE-PS 27 49 316, DE-PS 27 53 124, DE-Patentanmeldung 100 58 620.1).

Bei aminofunktionellen Organoalkoxysilanen kommt es unter thermischer Belastung zur Abspaltung einer Alkoxygruppe am Siliciumatom unter Bildung des zur Alkoxygruppe korrespondierenden Alkohols bei gleichzeitiger Ausbildung einer cyclischen Verbindung mit dem Si-N-Strukturelement, beispielsweise:

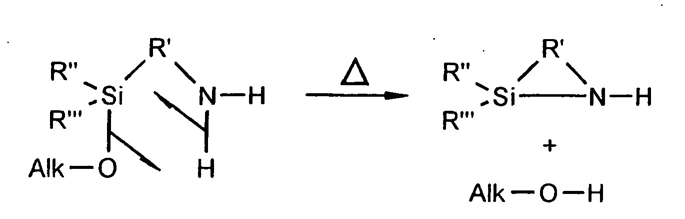

Dies hat zur Folge, dass bei einer destillativen Behandlung eines aminofunktionellen Organoalkoxysilans der Gehalt an linearem aminofunktionellem Organoalkoxysilan zu Gunsten der besagten cyclischen Verbindung (nachfolgend auch Zyklus genannt) sinkt. Dieses ist nachteilig, da dadurch der gewünschte hohe Gehalt an linearem aminofunktionellem Organoalkoxysilan, wie es z. B. für Anwendungen in den Schlichten bei der Glasfaserherstellung erforderlich ist, nicht mehr erreicht wird.

Der vorliegenden Erfindung lag daher die Aufgabe zugrunde, eine Möglichkeit bereitzustellen, den Gehalt an cyclischen Verbindungen in aminofunktionellen Organoalkoxysilanen zu verringern.

Die gestellte Aufgabe wird erfindungsgemäß entsprechend den Angaben der Patentansprüche gelöst.

Überraschenderweise wurde gefunden, dass man in einfacher Weise das mit Zyklus verunreinigte aminofunktionelle Organoalkoxysilan oder die im Herstellprozess bei der destillativen Aufarbeitung erhaltene Produktfraktion eines aminofunktionellen Organoalkoxysilans unter Zusatz eines Alkohols nachbehandeln kann, wodurch man den Anteil an cyclischen Verbindungen in vorteilhafter Weise auf < 0,1 % (GC-WLD-FL-%) bis hin zur Nachweisgrenze verringern kann.

Überraschend ist, dass man den besagten Zyklus durch Zugabe von Alkohol sowie gegebenenfalls mäßigem Erwärmen wieder spalten und so den Verlust an linearem Produkt in einfacher Weise wieder rückgängig machen kann. Dabei öffnet sich die Si-N-Bindung des Zyklus unter Anlagerung der Alkoxygruppe des zugegebenen Alkohols an das Si-Atom unter Rückbildung der Alkoxyfunktion und der linearen Aminofunktion, wobei der Wasserstoff des zugegebenen Alkohols auf den Stickstoff der Aminofunktion übergeht.

Das vorliegende Verfahren ist darüber hinaus besonders wirtschaftlich, da hierbei in der Regel keine Produktverluste auftreten.

Gegenstand der vorliegenden Erfindung ist daher ein Verfahren zur Herstellung eines aminofunktionellen Organoalkoxysilans der allgemeinen Formel l

R₂N-(CH₂)_{y}-Si(OR¹)₃₋ₙR²ₙ (I),

wobei
die Gruppen R gleich oder verschieden sind und
R für ein Wasserstoffatom, einen linearen oder verzweigten Alkylrest mit 1 bis 4 C-Atomen, einen Arylrest oder einen Arylalkylrest steht,
R¹ einen linearen, verzweigten oder cyclischen Alkylrest mit 1 bis 8 C-Atomen oder einen Arylrest darstellt,
R² für einen linearen, verzweigten oder cyclischen Alkylrest mit 1 bis 8 C-Atomen oder einen Arylrest steht,
y gleich 2 oder 3 oder 4 und
n gleich 0 oder 1 oder 2 sind,
durch Umsetzen eines chlorfunktionellen Organoalkoxysilans der allgemeinen Formel II

Cl-(CH₂)_{y}-Si(OR¹)₃₋ₙR²ₙ (II),

wobei
R¹ einen linearen, verzweigten oder cyclischen Alkylrest mit 1 bis 8 C-Atomen oder einen Arylrest darstellt,
R² für einen linearen, verzweigten oder cyclischen Alkylrest mit 1 bis 8 C-Atomen oder einen Arylrest steht und
y gleich 2 oder 3 oder 4 und
n gleich 0 oder 1 oder 2 sind,
   mit Ammoniak oder einem organischen Amin der allgemeinen Formel III

   HNR³R⁴ (III),

   wobei
   die Gruppen R³ und R⁴ gleich oder verschieden sind,
R³ für einen Arylrest, einen Arylalkylrest, einen linearen oder verzweigten Alkylrest mit 1 bis 4 C-Atomen oder ein Wasserstoffatom und
R⁴ für einen Arylrest, einen Arylalkylrest, einen linearen oder verzweigten Alkylrest mit 1 bis 4 C-Atomen oder ein Wasserstoffatom stehen,
Abtrennen der dabei gebildeten organischen Aminhydrochloride oder des Ammoniumchlorids und destillativer Aufarbeitung des so erhaltenen Rohprodukts, das dadurch gekennzeichnet ist, dass man ein aminofunktionelles Organoalkoxysilan oder die bei der destillativen Aufarbeitung erhaltene Produktfraktion eines aminofunktionellen Organoalkoxysilans unter Zusatz eines Alkohols behandelt.

Nach dem erfindungsgemäßen Verfahren kann man vorzugsweise folgende aminofunktionelle Organoalkoxysilane herstellen bzw. von cyclischen Verbindungen befreien:

3-Aminopropyltrimethoxysilan, N-Methyl-3-aminopropyl-trimethoxysilan, 3-Aminopropyltriethoxysilan, 3-Aminopropyl-methyl-diethoxysilan, N-Aminoethyl-3-aminopropyltrimethoxysilan, N-Aminoethyl-3-aminopropyl-methyl-dimethoxysilan, N-Aminoethyl-aminoethyl-3-aminopropyltrimethoxysilan.

Die Aufzählung schließt jedoch andere aminofunktionelle Organoalkoxysilane gemäß Formel l von der vorliegenden Erfindung nicht aus.

Im Allgemeinen führt man das erfindungsgemäße Verfahren derart aus, dass man dem mit cyclischen Aminosilanen verunreinigten Aminosilan einen Alkohol zusetzt und bei vergleichsweise milder Temperatur einige Zeit behandelt, insbesondere bei einer Temperatur im Bereich von 20 bis 60 °C, wobei man die Behandlung vorzugsweise für 30 Minuten bis 6 Stunden, besonders bevorzugt für 2 bis 4 Stunden, durchführt. Man kann die erfindungsgemäße Behandlung aber auch über einen längeren Zeitraum durchführen.

Beim erfindungsgemäßen Verfahren setzt man als Alkohol bevorzugt den zur Alkoxygruppe des aminofunktionellen Organoalkoxysilans korrespondierenden Alkohol ein. Dabei kann man den Alkohol fest, flüssig oder gasförmig dem zu behandelnden Aminosilan zugeben, wobei das Aminosilan bzw. die Produktfraktion geeigneterweise eine Temperatur von 20 bis 60 °C aufweist. Bevorzugt setzt man den Alkohol in flüssiger Form zu, insbesondere Methanol, Ethanol, n- sowie i-Propanol oder einen Alkohol, der mit der Alkoxygruppe des Silans korrespondiert.

Weiterhin ist beim erfindungsgemäßen Verfahren bevorzugt, dass man den Alkohol in bis zu stöchiometrischer Menge, bezogen auf die Menge des im Aminosilan oder in der Produktfraktion vorliegenden cyclischen Silans, zugibt.

Insbesondere führt man die erfindungsgemäße Behandlung des besagten Aminosilans bei einer Temperatur im Bereich von 20 bis 60 °C, vorzugsweise im Bereich von 25 bis 55 °C, besonders bevorzugt im Bereich von 30 bis 50 °C, durch. Dazu kann das Aminosilan bzw. die zu erfindungsgemäß behandelnde Produktfraktion zusätzlich beheizt werden. Geeigneterweise führt man die erfindungsgemäße Behandlung unter Rühren oder Umpumpen des besagten Aminosilans bzw. der besagten Produktfraktion durch.

Erfindungsgemäß behandelte Aminosilane zeichnen sich in hervorragender Weise durch einen Gehalt an cyclischem Aminosilan von < 0,1 GC-WLD-FL-% aus.

## Patentansprüche

1. Verfahren zur Herstellung eines aminofunktionellen Organoalkoxysilans der allgemeinen Formel I
R₂N-(CH₂)_{y}-Si(OR¹)₃₋ₙR²ₙ (I),
wobei
die Gruppen R gleich oder verschieden sind und
R für ein Wasserstoffatom, einen Alkylrest mit 1 bis 4 C-Atomen, einen Arylrest oder einen Arylalkylrest steht,
R¹ einen Alkylrest mit 1 bis 8 C-Atomen oder einen Arylrest darstellt,
R² für einen Alkylrest mit 1 bis 8 C-Atomen oder einen Arylrest steht,
y gleich 2 oder 3 oder 4 und
n gleich 0 oder 1 oder 2 sind,
durch Umsetzen eines chlorfunktionellen Organoalkoxysilans der allgemeinen Formel II
Cl-(CH₂)_{y}-Si(OR¹)₃₋ₙR²ₙ (II),
wobei
R¹ einen Alkylrest mit 1 bis 8 C-Atomen oder einen Arylrest darstellt,
R² für einen Alkylrest mit 1 bis 8 C-Atomen oder einen Arylrest steht und
y gleich 2 oder 3 oder 4 und
n gleich 0 oder 1 oder 2 sind,
mit Ammoniak oder einem organischen Amin der allgemeinen Formel III
HNR³R⁴ (III),
wobei
die Gruppen R³ und R⁴ gleich oder verschieden sind,
R³ für einen Arylrest, einen Arylalkylrest, einen Alkylrest mit 1 bis 4 C-Atomen oder ein Wasserstoffatom und
R⁴ für einen Arylrest, einen Arylalkylrest, einen Alkylrest mit 1 bis 4 C-Atomen oder ein Wasserstoffatom stehen,
Abtrennen der dabei gebildeten organischen Aminhydrochloride oder des Ammoniumchlorids und destillativer Aufarbeitung des so erhaltenen Rohprodukts,
**dadurch gekennzeichnet,**
**dass** man ein aminofunktionelles Organoalkoxysilan oder die bei der destillativen Aufarbeitung erhaltene Produktfraktion eines aminofunktionellen Organoalkoxysilans unter Zusatz eines Alkohols behandelt.

2. Verfahren nach Anspruch 1,
**dadurch gekennzeichnet,**
**dass** man als Alkohol den zur Alkoxygruppe des aminofunktionellen Organoalkoxysilans korrespondierenden Alkohol einsetzt.

3. Verfahren nach Anspruch 1 oder 2,
**dadurch gekennzeichnet,**
**dass** man die Behandlung bei einer Temperatur im Bereich von 20 bis 60 °C für 0,5 bis 6 Stunden durchführt.

4. Verfahren nach einem der Ansprüche 1 bis 3,
**dadurch gekennzeichnet,**
**dass** man den Alkohol fest, flüssig oder gasförmig zugibt, wobei das Aminosilan eine Temperatur von 20 bis 60 °C aufweist.

5. Verfahren nach einem der Ansprüche 1 bis 4,
**dadurch gekennzeichnet,**
**dass** man den Alkohol in bis zu stöchiometrischer Menge, bezogen auf die Menge des im Aminosilan oder in der Produktfraktion vorliegenden cyclischen Silans, zugibt.

6. Verfahren nach einem der Ansprüche 1 bis 5,
**dadurch gekennzeichnet,**
**dass** man die Behandlung unter Rühren oder Umpumpen des Aminosilans oder der Produktfraktion durchführt.

7. Verfahren nach einem der Ansprüche 1 bis 6,
**dadurch gekennzeichnet,**
**dass** man für die Durchführung der Behandlung das Aminosilan oder die Produktfraktion beheizt.

## Claims

1. A process for preparing an aminofunctional organoalkoxysilane of the formula I
R₂N-(CH₂)_{y}-Si(OR¹)₃₋ₙR²n (I),
where
the groups R are identical or different and
R is a hydrogen atom, an alkyl radical having from 1 to 4 carbon atoms, an aryl radical or an arylalkyl radical,
R¹ is an alkyl radical having from 1 to 8 carbon atoms or an aryl radical,
R² is an alkyl radical having from 1 to 8 carbon atoms or an aryl radical,
y is 2 or 3 or 4 and
n is 0 or 1 or 2,
by reacting a chlorofunctional organoalkoxysilane of the formula II
Cl-(CH₂)_{y}-Si(OR¹)₃₋ₙR²ₙ (II),
where
R¹ is an alkyl radical having from 1 to 8 carbon atoms or an aryl radical,
R² is an alkyl radical having from 1 to 8 carbon atoms or an aryl radical and
y is 2 or 3 or 4 and
n is 0 or 1 or 2,
with ammonia or an organic amine of the formula III
HNR ³R⁴ (III),
where
the groups R³ and R⁴ are identical or different,
R³ is an aryl radical, an arylalkyl radical, an alkyl radical having from 1 to 4 carbon atoms or a hydrogen atom and
R⁴ is an aryl radical, an arylalkyl radical, an alkyl radical having from 1 to 4 carbon atoms or a hydrogen atom,
separating off the organic amine hydrochloride or ammonium chloride formed and working up the resulting crude product by distillation; **characterized in that** an aminofunctional organoalkoxysilane or the product fraction of an aminofunctional organoalkoxysilane obtained in the work-up by distillation is treated by addition of an alcohol.

2. A process according to claim 1, **characterized in that** the alcohol corresponding to the alkoxy group of the aminofunctional organoalkoxysilane is used as alcohol.

3. A process according to either of claims 1 and 2, **characterized in that** the treatment is carried out at a temperature in the range from 20 to 60°C for from 0.5 to 6 hours.

4. A process according to any one of claims 1 to 3, **characterized in that** the alcohol is added in solid, liquid or gaseous form and the aminosilane is at a temperature of from 20 to 60°C.

5. A process according to any one of claims 1 to 4, **characterized in that** the alcohol is added in an amount up to the stochiometric amount, based on the amount of cyclic silane present in the aminosilane or in the product fraction.

6. A process according to any one of claims 1 to 5, **characterized in that** the treatment is carried out while the aminosilane or the product fraction is being stirred or circulated by pumping.

7. A process according to any one of claims 1 to 6, **characterized in that** the aminosilane or the product fraction is heated for carrying out the treatment.

## Revendications

1. Procédé de préparation d'un organoalkylsilane à fonction amino répondant à la formule générale I,
R₂N-(CH₂)_{y}-Si(OR¹)₃₋ₙR²ₙ (I)
où
les groupes R sont identiques et différents, et
R représente un atome d'hydrogène, un radical alkyle comportant de 1 à 4 atomes C , un radical aryle ou un radical arylalkyle,
R¹ représente un radical alkyle comportant de 1 à 8 atomes C ou un radical aryle,
R² représente un radical alkyle comportant de 1 à 8 atomes C ou un radical aryle,
y est égal à 2 ou 3 ou 4, et
n est égal à 0 ou 1 ou 2,
par décomposition d'un organaoalkylsilane à fonction chloro répondant à la formule générale II
Cl-(CH₂)_{y}-Si(OR¹)₃-ₙR²ₙ (II)
où
R¹ représente un radical alkyle comportant de 1 à 8 atomes C ou un radical aryle,
R² représente un radical alkyle comportant de 1 à 8 atomes C ou un radical aryle,
y est égal à 2 ou 3 ou 4, et
n est égal à 0 ou 1 ou 2,
avec de l'ammoniac ou une amine organique répondant à la formule générale III
HNR³R⁴ (III)
où
les groupes R³ et R⁴ sont identiques ou différents,
R³ représente un radical aryle, un radical arylalkyle, un radical alkyle comportant de 1 à 4 atomes C ou un atome d'hydrogène, et
R⁴ représente un radical aryle, un radical arylalkyle, un radical alkyle comportant de 1 à 4 atomes C ou un atome d'hydrogène,
avec séparation des aminohydrochlorures organiques ainsi formés ou du chlorure d'ammonium et régénération par distillation du produit brut ainsi obtenu,
**caractérisé en ce qu'**
on traite un organoalcoxysilane à fonction amino, ou la fraction de produit d'un organoalcoxysilane à fonction amino obtenue lors de la régénération par distillation, en ajoutant un alcool.

2. Procédé selon la revendication 1,
**caractérisé en ce qu'**
on utilise comme alcool celui correspondant au groupe alcoxy de l'organoalcoxysilane à fonction amino.

3. Procédé selon la revendication 1 ou 2,
**caractérisé en ce qu'**
on effectue le traitement à une température située dans la gamme de 20 à 60°C durant 0,5 à 6 heures.

4. Procédé selon l'une des revendications 1 à 3,
**caractérisé en ce qu'**
on ajoute l'alcool sous forme solide, liquide ou gazeuse, l'aminosilane présentant une température de 20 à 60°C.

5. Procédé selon l'une des revendications 1 à 4,
**caractérisé en ce qu'**
on ajoute l'alcool en quantité allant jusqu'à la quantité stoechiométrique, rapportée à la quantité de silane cyclique présent dans l'aminosilane ou dans la fraction de produit.

6. Procédé selon l'une des revendications 1 à 5,
**caractérisé en ce qu'**
on effectue le traitement en remuant, ou en brassant par pompe, l'aminosilane ou la fraction de produit.

7. Procédé selon l'une des revendications 1 à 6,
**caractérisé en ce que**
pour effectuer le traitement, on chauffe l'aminosilane ou la fraction de produit.
